# NEW EUROPEAN PATENT SPECIFICATION

(11) **EP 3 789 179 B2**
(45) Date of publication and mention of the opposition decision: **16.07.2025**
(45) Mention of the grant of the patent: 03.11.2021
(21) Application number: 20188256.0
(22) Date of filing: 28.07.2020
(51) Int. Cl.: B29C 49/46, B29C 49/42, B29C 49/64, B29C 49/06, B29C 49/12, B29L 31/00, B29C 49/36

(54) **MOULDING APPARATUS FOR MOULDING CONTAINERS STARTING FROM PARISONS MADE OF THERMOPLASTIC MATERIAL AND PROCESS THEREOF**
FORMVORRICHTUNG ZUM FORMEN VON BEHÄLTERN AUSGEHEND VON VORFORMLINGEN AUS THERMOPLASTISCHEM MATERIAL UND VERFAHREN DAFÜR
APPAREIL DE MOULAGE POUR FORMER DES RÉCIPIENTS À PARTIR DE PRÉFORMES EN MATIÈRE PLASTIQUE ET PROCÉDÉ ASSOCIÉ

(30) Priority: 09.09.2019 IT 201900015932
(43) Date of publication of application: 10.03.2021
(73) Proprietor: Gea Procomac S.p.A., 43038 Sala Baganza (PR) (IT)
(72) Inventor: ABELLI, Paolo, 43123 Parma (IT)
(74) Representative: Dondi, Silvia

(56) References cited:
- EP-A1- 3 269 529
- DE-A1- 102014 010 283
- US-A1- 2014 144 105

## Description

The present invention relates to a moulding apparatus for moulding containers starting from parisons made of thermoplastic material and a process thereof.

According to prior art, a stretch-blowing machine comprises a plurality of working stations, each with a forming mould. Aside from design variations, each mould comprises two half-moulds that reproduce the shape of the sides of the container and a bottom plate that reproduces the shape of the base of the container to be obtained.

According to known solutions, a thermoplastic parison is sterilized and heated before being stretch-blown.

In particular, known chemical sterilisation methods employ a vaporized hydrogen peroxide generator, also abbreviated as VHP generator. Different carriers may be used for the VHP, such as air and water vapour. The heated parison is then introduced into one of the moulds and the mouth is sealed by a closing member - the "seal" or blowing nozzle - through which compressed air is blown within the parison.

In the initial step of the forming process, the seal sends air into the parison at medium pressure (maximum 15-16 bar) and, simultaneously, a stretching rod is gradually introduced into the parison until it reaches the bottom.

This step is usually referred to as "pre-blowing".

After touching the bottom, the stretching rod continues its linear movement so as to stretch the parison until substantially reaching the desired length of the container to be obtained.

Subsequently, the seal blows air at high pressure (about 40 bar) so as to expand the parison until it adheres to the inner walls of the half-moulds and of the bottom plate. This blowing at high pressure is the real "blowing" step, following the "pre-blowing".

Simultaneously, the stretching rod retracts until it exits from the container. At the end of the forming process, the air inside the container is discharged, again through the seal. The seal is then moved away from the container. Such moulding apparatuses and processes for moulding containers are described in prior art documents EP3269529A1, DE102014010283A1 and US2014/144105A1.

The process of stretch-blow moulding results is a high consumption of air. Sometimes, part of the exhausted air of the blowing is recovered and used for pre-blowing in the subsequent cycles.

In this context, the technical task at the basis of the present invention is to propose a moulding apparatus for moulding containers starting from parisons made of thermoplastic material and a process thereof, which overcome the above-mentioned drawbacks of the prior art.

In particular, the object of the present invention is to propose a moulding apparatus for moulding containers starting from parisons made of thermoplastic material and a process thereof, that have a reduced environmental impact with respect to the known solutions.

The stated technical task and specified objects are substantially achieved by a moulding apparatus for moulding containers starting from parisons made of thermoplastic material, each parison having a tubular body and a neck, the moulding apparatus comprising:
- a VHP or vaporized hydrogen peroxide generator for sterilizing the parisons;
- a heating unit for heating the body of the parisons after they have been sterilized;
- a stretch-blowing unit for stretch-blowing the heated body of the parisons by injecting pressurized air therein so as obtain the containers, the blowing unit having a recovery line (L) for the exhausted pressurized air,
the exhausted pressurized air coming from the recovery line being injected in the VHP generator for acting as a carrier for the vaporized hydrogen peroxide.

In accordance with a preferred embodiment, the moulding apparatus further comprises a pressure reducer configured to reduce the pressure of the exhausted air into between 0.5 bar and 7 bar.

Preferably, the pressure reducer is arranged upstream the VHP generator. In accordance with an aspect of the invention, the moulding apparatus further comprises one or more filters arranged along the recovery line for filtering the exhausted air.

The stated technical task and specified objects are substantially achieved by a process for moulding containers starting from parisons made of thermoplastic material, each parison having a tubular body and a neck, the process comprising the steps of:
- sterilizing the parisons by means of VHP or vaporized hydrogen peroxide;
- heating the body of the parisons after they have been sterilized;
- stretch-blowing the heated body of the parisons by injecting pressurized air therein so as obtain the containers;
- discharging the exhausted pressurized air after the stretch-blowing,
the VHP used for the sterilizing step being carried by said exhausted pressurized air.

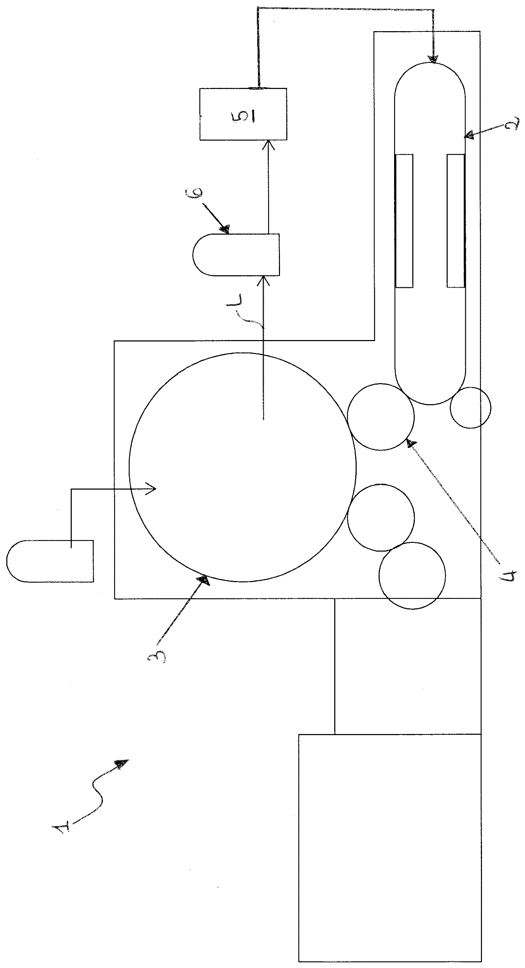

Additional features and advantages of the present invention will be more apparent from the approximate, and hence non-restrictive description of a preferred but non-exclusive embodiment of a moulding apparatus for moulding containers starting from parisons made of thermoplastic material and a process thereof, as illustrated in the appended figure 1 that illustrates a plant view of a moulding apparatus for moulding containers starting from parisons made of thermoplastic material, according to the present invention.

With reference to the figures, number 1 identifies a moulding apparatus for moulding containers starting form parisons made of thermoplastic material. A parison comprises a tubular body, that undergoes stretch-blow moulding, and a neck or finish that is not shaped.

The moulding apparatus 1 comprises a vaporized hydrogen peroxide generator 5, shortly indicated as VHP generator, for sterilizing the parisons.

After sterilization, the parisons are fed to a heating unit 2 for heating the body of the parisons and a stretch-blowing unit 3 for stretch-blowing the heated body of the parisons.

For example, the heating unit 2 includes a system of lamps such that the parisons are heated by irradiation. As an alternative or in addition to the lamps, the heating takes place by forced convection of hot air. The heating unit 2 (or oven) preferably has a linear configuration.

The parisons are heated in the oven 2 so that on leaving the same they have a predefined thermal profile adapted to allow forming by stretch-blowing.

The stretch-blowing unit 3 comprises a plurality of stations, each of which is equipped with a mould having a cavity for housing a parison and a blowing nozzle that is configured to inject pressurized air into the parison. In particular, the stretch-blowing unit 3 is configured to perform two air injections in the body of the parisons, that are:
- pre-blowing: injection at a maximum pressure of about 15-16 bar;
- blowing: injection at a maximum pressure of about 40 bar.

At the end of these steps, the air is discharged through the blowing nozzles in a recovery line L.

In the embodiments disclosed and illustrated herewith, the stretch-blowing unit 3 is preferably of the rotary carousel type. Alternatively, it can be of the linear type.

Between the heating unit 2 and the stretch-blowing unit 3 there is interposed a transferring unit 4, preferably a transferring star-wheel.

The transferring star-wheel 4 is equipped with means for gripping the parisons by their neck.

The exhausted air in the recovery line L usually has a pressure comprised between 3 bar and 16 bar, that may be fed to VHP generator 5. In particular, the exhausted air acts as a carrier for the VHP to be directed on the parisons.

Preferably, before feeding the VHP generator 5, the pressure of the exhausted air is reduced by a pressure reducer 6. In particular, the pressure reducer 6 is configured to provide air having a pressure comprised between 0.5 bar and 7 bar.

According to alternative embodiments, along the recovery line L there may be one or more filters for filtering the exhausted air.

The process for moulding containers starting from parisons made of thermoplastic material, according to the present invention, is described below.

The process comprises the steps of:
- sterilizing the parisons by means of VHP or vaporized hydrogen peroxide;
- heating the body of the parisons after they have been sterilized;
- stretch-blowing the heated body of the parisons by injecting pressurized air therein so as to obtain containers;
- discharging the exhausted pressurized air of the stretch-blowing.
Originally, the exhausted air is recovered, i.e. used as a carrier for the VHP.

The exhausted air is already compressed (between 3-16 bar) and may be connected directly to the pressure reducer 6.

From the description made, the features of the moulding apparatus for moulding containers starting from parisons made of thermoplastic material and a process thereof according to the present invention are clearly apparent, as are the advantages thereof.

In particular, the proposed solution allows to recover the air exhausted from the blowing step and to use it as a carrier for VHP during the sterilization of the parisons.

This reduces the environmental impact with respect to the known solutions.

## Claims

1. Moulding apparatus (1) for moulding containers starting from parisons made of thermoplastic material, each parison having a tubular body and a neck, said moulding apparatus (1) comprising:
- a VHP or vaporized hydrogen peroxide generator (5) for sterilizing the parisons;
- a heating unit (2) for heating the body of the parisons after they have been sterilized;
- a stretch-blowing unit (3) for stretch-blowing the heated body of the parisons by injecting pressurized air therein so as obtain said containers, said blowing unit (3) having a recovery line (L) for the exhausted pressurized air,
the exhausted pressurized air coming from said recovery line (L) being injected in the VHP generator (5) for acting as a carrier for the vaporized hydrogen peroxide.

2. Moulding apparatus (1) according to claim 1, further comprising a pressure reducer (6) configured to reduce the pressure of the exhausted air into between 0.5 bar and 7 bar, said pressure reducer (6) being arranged upstream the VHP generator (5).

3. Moulding apparatus (1) according to claim 1 or 2, further comprising one or more filters arranged along said recovery line (L) for filtering the exhausted air.

4. Process for moulding containers starting from parisons made of thermoplastic material, each parison having a tubular body and a neck, said process comprising the steps of:
- sterilizing the parisons by means of VHP or vaporized hydrogen peroxide;
- heating the body of the parisons after sterilization;
- stretch-blowing the heated body of the parisons by injecting pressurized air therein so as obtain said containers;
- discharging the exhausted pressurized air after the stretch-blowing,
the VHP used for the sterilizing step being carried by said exhausted pressurized air.

## Patentansprüche

1. Formvorrichtung (1) zum Formen von Behältern ausgehend von Vorformlingen aus thermoplastischem Material, wobei ein jeder Vorformling einen röhrenförmigen Körper und einen Hals aufweist, wobei die Formvorrichtung (1) umfasst:
- einen VHP- oder verdampften Wasserstoffperoxidgenerator (5) zum Sterilisieren der Vorformlinge;
- eine Heizeinheit (2) zum Heizen des Körpers der Vorformlinge, nachdem diese sterilisiert wurden;
- eine Streckblaseinheit (3) zum Streckblasen des erhitzten Körpers der Vorformlinge durch Einblasen von Druckluft darin, um die Behälter zu erhalten, wobei die Blaseinheit (3) eine Rückgewinnungsleitung (L) für die verbrauchte Druckluft aufweist,
wobei die aus der Rückgewinnungsleitung (L) kommende verbrauchte Druckluft in den VHP-Generator (5) eingeblasen wird, um als Träger für das verdampfte Wasserstoffperoxid zu wirken.

2. Formvorrichtung (1) nach Anspruch 1, ferner umfassend einen Druckminderer (6), der ausgebildet ist, um den Druck der verbrauchten Luft auf zwischen 0,5 bar und 7 bar zu reduzieren, wobei der Druckminderer (6) stromaufwärts des VHP-Generators (5) angeordnet ist.

3. Formvorrichtung (1) nach Anspruch 1 oder 2, ferner umfassend einen oder mehrere Filter, die entlang der Rückgewinnungsleitung (L) zum Filtern der verbrauchten Luft angeordnet sind.

4. Verfahren zum Formen von Behältern ausgehend von Vorformlingen aus thermoplastischem Material, wobei ein jeder Vorformling einen röhrenförmigen Körper und einen Hals aufweist, wobei das Verfahren die Schritte umfasst:
- Sterilisieren der Vorformlinge mittels VHP oder verdampften Wasserstoffperoxids;
- Erhitzen des Körpers der Vorformlinge nach dem Sterilisieren;
- Streckblasen des erhitzten Körpers der Vorformlinge durch Einblasen von Druckluft darin, um die Behälter zu erhalten;
- Abführen der verbrauchten Druckluft nach dem Streckblasen,
wobei das für den Sterilisationsschritt verwendete VHP von der verbrauchten Druckluft getragen wird.

## Revendications

1. Appareil de moulage (1) pour former des récipients à partir de préformes en matière thermoplastique, chaque préforme ayant un corps tubulaire et un col, ledit appareil de moulage (1) comprenant :
- un générateur de PHV ou peroxyde d'hydrogène vaporisé (5) pour stériliser les préformes ;
- une unité de chauffage (2) servant à chauffer le corps des préformes depuis elles ont été stérilisées ;
- une unité d'étirage-soufflage (3) servant à étirer-souffler le corps chauffé des préformes en y injectant de l'air sous pression de manière à obtenir lesdits récipients, ladite unité de soufflage (3) comportant une ligne de récupération (L) pour l'air sous pression évacué,
l'air sous pression évacué provenant de ladite ligne de récupération (L) étant injecté dans le générateur de PHV (5) pour agir comme un entraîneur du peroxyde d'hydrogène vaporisé.

2. Appareil de moulage (1) selon la revendication 1, comprenant de plus un réducteur de pression (6) configuré pour réduire la pression de l'air évacué entre 0,5 et 7 bars, ledit réducteur de pression (6) étant disposé en amont du générateur de PHV (5).

3. Appareil de moulage (1) selon la revendication 1 ou 2, comprenant de plus un ou plusieurs filtres disposés le long de ladite ligne de récupération (L) pour filtrer l'air évacué.

4. Procédé pour former des récipients à partir de préformes en matière thermoplastique, chaque préforme ayant un corps tubulaire et un col, ledit procédé comprenant les étapes de :
- stériliser les préformes au moyen de PVH ou de peroxyde d'hydrogène vaporisé ;
- chauffer le corps des préformes après la stérilisation ;
- étirer-souffler le corps chauffé des préformes en y injectant de l'air sous pression de manière à obtenir lesdits récipients ;
- décharger l'air sous pression évacué après l'étirage-soufflage,
le PHV utilisé pour l'étape de stérilisation étant entraîné par ledit air sous pression évacué.
